# EUROPEAN PATENT SPECIFICATION

(11) **EP 2 614 171 B1**
(45) Date of publication and mention of the grant of the patent: **03.12.2014**
(21) Application number: 11757178.6
(22) Date of filing: 09.09.2011
(51) Int. Cl.: C22C 38/00

(54) **SUPER BAINITE STEEL AND METHOD FOR MANUFACTURING IT**
SUPERBAINITISCHER STAHL UND VERFAHREN ZU DESSEN HERSTELLUNG
ACIER SUPER BAINITIQUE ET SON PROCÉDÉ DE FABRICATION

(30) Priority: 09.09.2010 EP 10009375
(43) Date of publication of application: 17.07.2013
(73) Proprietor: The Secretary of State for Defence, Salisbury, Wiltshire SP4 0JQ (GB)
(72) Inventor: CLARKE, Richard, NL-1951 JZ Velsen-Noord (NL); DAVIES, Paul, NL-1951 JZ Velsen-Noord (NL); MADILL, John, NL-1951 JZ Velsen-Noord (NL); ROSE, Andrew, James, NL-1951 JZ Velsen-Noord (NL); SMITH, Andrew, NL-1951 JZ Velsen-Noord (NL); THOMAS, Alun, NL-1951 JZ Velsen-Noord (NL)
(74) Representative: Farnsworth, Alastair Graham
(86) International application number: PCT/EP2011/004550
(87) International publication number: WO 2012/031771

(56) References cited:
- WO-A2-2010/013054
- CN-A- 101 586 216
- US-A- 6 086 685
- Paul Rincon: "Holes give edge to new mod armour", , 5 January 2009 (2009-01-05), XP002629249, Retrieved from the Internet: URL:http:/news.bbc.co.uk/go/pr/fr/-/2/hi/s cience/nature/7811567.stm [retrieved on 2011-03-18]

## Description

The invention relates to super bainite steel and a method for manufacturing such a super bainite steel.

Super bainite steel is a high carbon steel having high strength and hardness, which is especially suited for armour applications. Such a steel is described in GB 2352726 A. However, it has been found that the high percentages alloying elements used according to this patent application are not always needed, and that it should be possible to use shorter manufacturing times. This is described in WO 2010/013054 A2. According to this document carbide free bainite steel can be produced containing 50 to 90 % bainite. The carbide free bainite is composed of very fine bainite platelets (thickness less than 1 µm), which epitomize the term "Super Bainite Steel" for this type of steel containing nano-scale microstructural features, the remainder being austenite, using relatively low concentrations alloying elements. The manufacturing process of such super bainite steel is comparatively economical.

However, in experiments it has been found that this known process is still rather complicated to perform in practice, when commercially acceptable products should be obtained.

It is an object of the invention to produce a super bainite steel that has very low percentages of alloying elements.

It is a further object of the invention to provide a super bainite steel that is economical, both in production and in use.

It is another object of the invention to provide a super bainite steel that fits the quality requirements of the end-users of the material.

It is also an object of the invention to provide a method for manufacturing such a super bainite steel which is as economical as possible.

According to a first aspect of the invention there is provided a super bainite steel having a microstructure of retained austenite up to 30% with a balance of carbide-free bainite laths and bainite laths with intra-granular carbides present, the bainite laths having an average thickness below 100nm and consisting of the following elements in weight %:
C: 0.4 - 1.1
Mn: 0.4 - 2.1
Si: 0.4 - 1.1
Al: 0.0 - 2.0
Cr: less than or equal to 1.4
Ni: 0.0 - 2.5
Mo: 0.0-0.6
V: 0.0 - 0.3
Co: 0.0-3.0
P: < 0.025
S: < 0.025
the balance being iron and unavoidable impurities.

It is emphasized that the term super bainite steel as used in the description is to indicate that it concerns a bainitic steel that is suitable to be used for armour plating and like applications where high strength and hardness are required. With regard to composition and micro-structure the following definition of the super bainite steel according to the invention applies: a bainitic steel containing low-temperature bainite formed following austenitisation during a subsequent isothermal treatment below 350°C, but above the martensite start temperature. The resulting bainitic steel, the super bainite steel according to the invention, comprises a fine-scale mixture, in varying proportions, of retained austenite, carbide-free bainite laths and bainite laths with intra-granular carbides present.

The inventors have found that it is possible to use even less silicon than exemplified in WO 2010/013054, where the amount of silicon used is 1.55 weight %. A lower amount of silicon helps reducing the surface oxide, which is deleterious to the surface condition. A lower amount of silicon also makes it possible to reduce the total alloy content, and this has the benefit of maintaining the heat during secondary steel making, which increases the probability of a successful transfer to the continuous caster. Furthermore, the inventors have found that is possible to use a reduced amount of carbon and low amounts of chromium, molybdenum and vanadium.

According to a preferred embodiment the following elements are present in weight %:
C: 0.4 - 1.0 and/or
Mn: 0.7 - 2.1 and/or
Si: 0.4 - 1.1 and/or
Al: 0.0 - 1.0 and/or
Cr: 0.3 - 1.2 and/or
Ni: 0.0 - 1.0 and/or
Mo: 0.01 - 0.4 and/or
V: 0.0 - 0.2 and/or
Co: 0.0-2.0.

More preferably, the following elements are present in weight %:
C: 0.6 - 0.9 and/or
Mn: 0.8 - 1.4 and/or
Si: 0.7 - 1.0 and/or
Al: <0.1 and/or
Cr: 0.7 - 1.1 and/or
Mo: 0.01-0.2 and/or
Ni: < 0.1 and/or
V: < 0.1 and/or
Co: < 0.5.

A high amount of 0.4 - 1.1 weight % carbon is present since carbon is needed to obtain bainite. Moreover, excess carbon should be present such that carbon is present in the bainitic ferrite at a concentration above the equilibrium concentration; this results in very fine bainitic plates. Preferably the amount of carbon is 0.4 - 1.0 weight % and more preferably 0.6 - 0.9 weight % so as to limit the amount of alloying elements.

Manganese is present in an amount of 0.4 - 2.1 weight %. It is known that the higher the manganese amount, the slower the transition of austenite to bainite will take place. Therefore, the amount of manganese should be lower than mentioned in GB 2352726 A. However, for strength manganese has to be present. Preferably manganese is present in an amount of 0.7 - 2.1 weight % and even more preferably in an amount of 0.8 - 1.4 weight %.

Silicon is present in an amount of 0.4 - 1.1 weight %, which is already a reduction in comparison to the examples given in GB 2352726 A and WO 2010/013054 A2. However, preferably the amount of silicon is still lower and within the range of 0.7 - 1.0 weight %. Surface oxides are reduced using such lower silicon contents.

Aluminium can be used to replace silicon but is less effective and makes the manufacturing process more difficult. Therefore, aluminium is preferably very low or not added to the melt, except as required by steel making for deoxidation.

Chromium is an essential element for producing super bainite steel but should be as low as possible in view of cost. Therefore, chromium is present in an amount of less than or equal to 1.4 weight % and preferably in an amount of 0.3 - 1.2 weight %, more preferably in an amount of 0.7 - 1.1 weight %.

Molybdenum is present in an amount of 0.0 - 0.6 weight %. Molybdenum makes the final transformation to bainite easier because the pearlite transformation is slowed. Of course the amount of molybdenum should be as low as possible in view of cost, so the preferred range is 0.01 - 0.4 weight % molybdenum and even more preferred in a range of 0.01 - 0.2 weight %.

Vanadium can be present in an amount of up to 0.3 weight % because it improves toughness, but is expensive, so preferably vanadium is present up to 0.2 weight % and more preferably vanadium is present up to 0.1 weight % or not present at all.

Cobalt can be present in an amount of up to 3.0 weight % to enhance strength but is a costly alloying element, so preferably cobalt is used in an amount up to 2 weight % and more preferably cobalt is present in an amount up to 0.5 weight % or cobalt is not present at all.

Phosphorous and sulphur are contaminants in steel and should be kept below a specified maximum, and preferably as low as possible.

Preferably the super bainite steel has a hardness of at least 550 HV30, preferably a hardness of 600 - 710 HV30. Such a hardness is a requirement for use as armour plate in certain military applications. It is even possible to reach a hardness of 670 HV30 or more.

Preferably the super bainite steel is provided in the form of plates, strip and/or sheets having a thickness dimension of 0 - 25 mm, preferably a thickness of 2 - 15 mm, and a width dimension of at least 400 mm, preferably at least 1000 mm. These plates, strip and/or sheet have a microstructure of retained austenite up to 30 percent with a balance of carbide-free bainite laths and bainite laths with intra-granular carbides present, the bainite laths having an average thickness below 100 nm. These thicknesses are used in armour of different categories.

According to a preferred embodiment the super bainite steel is provided in plates having perforations providing a weight reduction of 0 - 50%, the perforations preferably having an opening width or a diameter between 2 and 15 mm. The perforations are made to reduce the weight of the armour, while the armour remains impact resistant. The perforations reduce the propagation of cracks which may result from the impact of projectiles.

Preferably the plate has been levelled to achieve a flatness having a deviation of less than 6 mm over 1 metre in width and length. Such a flatness is beneficial when post-processing the plate.

Preferably, the steel has a heat resistance relating to hardness up to 300° C, preferably a heat resistance relating to hardness up to 500° C. This heat resistance is a very beneficial property for steel used as armour in severe conditions.

According to a second aspect of the invention a method for manufacturing a super bainite steel according to the first aspect of the invention is provided, comprising the following steps:
- preparing molten steel having the required composition;
- continuously casting the molten steel into a slab;
- hot rolling the slab into strip;
- coiling the strip;
- austenising the strip at least once;
- heat treating the steel by quenching in a salt bath at a temperature between 220 - 300°C.

The use of the low concentrations of elements in the steel as defined in the first aspect of the invention is very advantageous for the castability of the steel. Especially a lower silicon content makes casting easier, and the same holds for lower carbon contents. Moreover, the inventors have demonstrated that it is possible to continuously cast such high carbon and high silicon steels, which so far had not been proved. So far the super bainite steel plates have been made from ingots.

Preferably the super bainite steel strip is decoiled, cut into plates and levelled before heat treatment. Before the heat treatment the steel has a relatively low strength, so the working of the steel should be performed in this stage.

According to a preferred embodiment the plates are perforated in the hot rolled condition prior to heat treatment, the perforating preferably being performed by laser cutting or water cutting or drilling or mechanical punching. The perforations reduce the weight of the steel plates, which is of importance when the plates are used as armour plates, and are known to enhance ballistic performance. Mechanical punching can cause deformation of the substrate that should be corrected by levelling prior to further processing.

Preferably the austenising is performed using austempering during a soak time of at least 30 minutes at a temperature of at least 900° C. Especially for thick strip the austenising must be performed at a temperature that is high enough and during a timespan that is long enough to fully austenise the strip.

According to a preferred embodiment the austenising is performed in an endothermic atmosphere having a carbon potential of at least 0.4 % carbon and preferably of at least 0.8 % carbon. The atmosphere should be endothermic to perform the austenising in a controlled way; the carbon potential of the atmosphere should be 0.4 % C or above so as to prevent decarburisation of the outer layers of the steel strip when relatively small amounts of carbon are used in the steel according to the invention, and above 0.8 % C or above when mid-range amounts of carbon are used in the super bainite steel according to the invention.

The heat treatment is performed by quenching in a salt bath, at a temperature between 220 and 300° C, preferably at a temperature between 230 and 260° C. A salt bath has a high energy capacity and a high energy absorption, which ensures that not only the outer layers are cooled fast enough to form bainite, but that also the core of thick plates are cooled above the critical cooling rate such that no pearlite will be formed. The critical cooling rate depends on the alloying elements in the steel. The higher the temperature of the salt bath is, the faster the bainite transformation will take place. Preferably the salt bath is agitated so the temperature of the salt bath in contact with the steel is controlled.

According to a preferred embodiment the heat treatment is performed with a cooling rate of 2 - 20° C per second, preferably at a cooling rate of 5 - 20° C per second when using salt bath quenching. According to CCT diagrams for this type of steel the critical cooling rate is 1° C/s, specifically for the examples given in GB 2352726 A and WO 2010/013054 A2. However, it is advantageous to use a higher cooling rate to be sure the core of the steel is cooled fast enough, and still higher cooling rates are preferred to obtain a fast cooling process which is advantageous when higher production volumes have to be processed. It was found that the cooling rate should at least be 2°C/s when passing the pearlite nose to avoid that pearlite is formed.

Preferably the steel is descaled prior to the heat treatment, preferably before levelling of the plates. Descaling provides a surface to the steel which makes further processing easier. Preferably, descaling is performed by shot blasting.

The invention will be elucidated with reference to a number of examples hereinbelow.

The process route for producing super bainite steel comprises the following general steps:
- steel making
- continuous casting
- hot rolling
- coiling
- decoiling
- levelling
- cutting to length
- shot blasting
- further processing, such as laser profiling, punching, drilling, water jet cutting, bending, forming
- heat treating to form bainite.

In a first series of experiments the castings as given in table 1 have been produced.

**Table 1: Identity and chemical composition of steels**

| Example | | Weight, % | | | | | | | | | |
|---|---|---|---|---|---|---|---|---|---|---|---|
| | | C | Si | Mn | P | S | Cr | Mo | Al | N | V |
| A | Low Si | 0.81 | 1.00 | 1.02 | 0.001 | 0.008 | 1.01 | 0.24 | 0.028 | 0.010 | 0.100 |
| B | Lower Si | 0.82 | 0.77 | 1.03 | 0.001 | 0.008 | 1.02 | 0.24 | 0.024 | 0.010 | 0.100 |
| C | Low C high Mn | 0.50 | 0.99 | 2.00 | <0.001 | 0.008 | 1.02 | 0.24 | 0.026 | 0.009 | <0.001 |

In a second series of experiments the castings as given in table 2 have been produced.

**Table 2: Identity and chemical composition of steels**

| Example | Weight, % | | | | | | | | | |
|---|---|---|---|---|---|---|---|---|---|---|
| | C | Si | Mn | P | S | Cr | Mo | Al | N | V |
| D | 0.75 | 0.75 | 1.00 | 0.015 | 0.010 | 0.70 | 0.00 | 0.035 | 0 | 0 |
| E | 0.75 | 0.75 | 1.00 | 0.015 | 0.010 | 0.80 | 0.15 | 0.035 | 0 | 0 |

After steel making, casting, hot rolling to thicknesses of 6.3 and 8.3 mm, coiling, decoiling and levelling the properties of the steel types have been determined. Samples of the castings have been taken and the hardness and microstructure have been determined. The results are given table 3 for examples A- C.

**Table 3: hardness and microstructure after hot rolling**

| Example | Hardness HV30 | Microstructure |
|---|---|---|
| A | 345 | Pearlite |
| B | 342 | Pearlite |
| C | 481 | Martensite + Pearlite |

Thereafter, the steel coils have been cut into plates and shot blasted. The post-processing of the steel plates has been tries by making perforations in the plates. Since perforations are a requirement for armour plate, several methods have been reviewed. It has been found that punching is the most cost-effective option, but that drilling, laser cutting and water jet cutting are also possible. In this stage of the process other working is also possible, such as bending and forming.

As a last step the plates, whether perforated, cut, worked or not, the steel plates are heat treated by austenising at a temperature of 900° C for a period of 1 hour and 30 minutes, and quenched in a salt bath having a temperature of approximately 250° C, in which the plates are cooled with a cooling rate of approximately 15° C/s. After 5 - 20 hours in the salt bath and more preferably after 8 - 16 hours in the salt bath, the plates are removed and cooled to room temperature in air.

The mechanical properties of the super bainite steels after the heat treatment according to experiments A - C are given in tables 4 and 5.

**Table 4: tensile properties**

| Example | E (MPa) | R_{p0.2%} (MPa) | Rₘ (MPa) | A₄₀/A₂₅ (%) | A (%) | Comments |
|---|---|---|---|---|---|---|
| A | 220 | 1626 | 2079 | 2.2 | 2.9 | Low Si |
| B | 196 | 1596 | 2086 | 3.2 | 4.2 | Lowest Si |
| C | 164 | 1256 | 1740 | 8.6 | 11.4 | Low C High Mn |

**Table 5: hardness and microstructure after heat treatment**

| Example | Hardness/HV30 | Microstructure |
|---|---|---|
| A | 688 | Superbainite (bainite + retained austenite) |
| B | 702 | Superbainite (bainite + retained austenite) |
| C | 548 | Superbainite (bainite + retained austenite) |

The above results for examples A and B show that with the lower silicon levels according to the invention super bainite steels can be produced having the same or even better mechanical properties such as hardness and strength as known from the patent applications, discussed in the introduction. Also the elongation (A) is in the range mentioned in WO 2010/013054. The processability of the steel types according to the invention is however better than the known super bainite steels due to especially the lower silicon levels.

Metallurgical investigation of specimens of Example B has shown retained austenite levels of 10-30%. With EBSD (Electron backscatter diffraction) assessment the percentage of retained austenite averaged 10.8% and with XRD (X-ray diffraction) assessment an average percentage of 26% was found. Since with XRD smaller areas can be resolved than with EBSD a higher figure for XRD assessment could be expected. The amount of carbide in the structure has been assessed at approximately 10% by volume.

The carbide content of the super bainite steel of Examples A, B and C is within a range of 5-20% by volume.

Example C shows a super bainite steel having a relatively low carbon level which has a somewhat lower hardness and strength, but a much higher elongation.

The examples D and E show compositions having a relatively low Mo content while the other alloying elements are also quite low.

## Claims

1. Super bainite steel having a microstructure of retained austenite up to 30 percent with a balance of carbide-free bainite laths and bainite laths with intra-granular carbides present, the bainite laths having an average thickness below 100nm and consisting of the following elements in weight %:
C: 0.4 - 1.1
Mn: 0.4 - 2.1
Si: 0.4 - 1.1
Al: 0.0 - 2.0
Cr: less than or equal to 1.4
Ni: 0.0 - 2.5
Mo: 0.0 - 0.6
V: 0.0 - 0.3
Co: 0.0 - 3.0
P: < 0.025
S: < 0.025
the balance being iron and unavoidable impurities.

2. Steel according to claim 1, wherein the following elements are present in weight %:
C: 0.4 - 1.0 and/or
Mn: 0.7 - 2.1 and/or
Si: 0.4 - 1.1 and/or
Al: 0.0 - 1.0 and/or
Cr: 0.3 - 1.2 and/or
Ni: 0.0 - 1.0 and/or
Mo: 0.01 - 0.4 and/or
V: 0.0 - 0.2 and/or
Co: 0.0 - 2.0.

3. Steel according to claim 1 or 2, wherein the following elements are present in weight %:
C: 0.6 - 0.9 and/or
Mn: 0.8 - 1.4 and/or
Si: 0.7 - 1.0 and/or
Al: <0.1 and/or
Cr: 0.7 - 1.1 and/or
Mo: 0.01 - 0.2 and/or
Ni: < 0.1 and/or
V: < 0.1 and/or
Co: < 0.5.

4. Steel according to any one of claims 1 - 3, wherein the steel is provided in the form of plates, strip and/or sheets having a thickness dimension of 0 - 25 mm, preferably a thickness of 2 - 15 mm, and a width dimension of at least 400 mm, preferably at least 1000mm.

5. Steel according to any one of claims 1 - 4, wherein the steel is provided in plates having perforations providing a weight reduction of 0 - 50%, the perforations preferably having an opening width or a diameter between 2 and 15 mm.

6. Steel according to claim 4, or 5 wherein the plate has been levelled to achieve a flatness having a deviation of less than 6 mm over 1 metre in width and length.

7. Method for manufacturing a super bainite steel, said steel being according to any one of the preceding claims, comprising the following steps:
preparing molten steel having the required composition;
continuously casting the molten steel into a slab;
hot rolling the slab into strip;
coiling the strip;
austenising the strip at least once;
optionally descaling;
heat treating the steel by quenching in a salt bath at a temperature between 220 and 300° C

8. Method according to claim 7 wherein quenching in a salt bath is carried out between 230 and 260°C.

9. Method according to claim 7 or 8 wherein the steel is descaled before heat treatment.

10. Method according to any one of claims 7 to 9 wherein the steel strip is decoiled, cut into plates and leveled before hot treatment.

11. Method according to claim 10, wherein the plates are perforated in the hot rolled condition prior to heat treatment, the perforating preferably being performed by laser cutting or water cutting or drilling or mechanical punching.

12. Method according to any one of claims 7 to 11, wherein the austenising is performed using austempering during a soak time of at least 30 minutes at a temperature of at least 900° C.

13. Method according to claim 12, wherein the austenising is performed in an endothermic atmosphere having a carbon potential of at least 0.4 carbon, preferably a carbon potential of at least 0.8 carbon.

14. Method according to any one of the claims 7 - 13, wherein the heat treatment is performed with a cooling rate of 2 - 20° C per second

15. A method according to claim 14 wherein the heat treatment is carried out at cooling rate of 5 - 20° C per second.

## Patentansprüche

1. Superbainitstahl, der eine Mikrostruktur mit bis zu 30 % Restaustenit aufweist, wobei der Rest aus carbidfreien Bainitlatten und Bainitlatten besteht, bei denen intragranulare Carbide vorhanden sind, wobei die Bainitlatten eine mittlere Dicke unter 100 nm aufweisen, und der aus den folgenden, in Gewichtsprozent angegebenen Elementen besteht:
| | |
|---|---|
| C: | 0,4 - 1,1 |
| Mn: | 0,4 - 2,1 |
| Si: | 0,4 - 1,1 |
| Al: | 0,0 - 2,0 |
| Cr: | 1,4 oder darunter |
| Ni: | 0,0 - 2,5 |
| Mo: | 0,0 - 0,6 |
| V: | 0,0 - 0,3 |
| Co: | 0,0 - 3,0 |
| P: | < 0,025 |
| S: | < 0,025 |
wobei der Rest aus Eisen und unvermeidbaren Verunreinigungen besteht.

2. Stahl nach Anspruch 1, wobei die folgenden, in Gewichtsprozent angegebenen Elemente vorliegen:
| | |
|---|---|
| C: | 0,4 - 1,0 und/oder |
| Mn: | 0,7 - 2,1 und/oder |
| Si: | 0,4 - 1,1 und/oder |
| Al: | 0,0 - 1,0 und/oder |
| Cr: | 0,3 - 1,2 und/oder |
| Ni: | 0,0 - 1,0 und/oder |
| Mo: | 0,01 - 0,4 und/oder |
| V: | 0,0 - 0,2 und/oder |
| Co: | 0,0 - 2,0. |

3. Stahl nach Anspruch 1 oder 2, wobei die folgenden, in Gewichtsprozent angegebenen Elemente vorliegen:
| | |
|---|---|
| C: | 0,6 - 0,9 und/oder |
| Mn: | 0,8 - 1,4 und/oder |
| Si: | 0,7 - 1,0 und/oder |
| Al | < 0,1 und/oder |
| Cr: | 0,7 - 1,1 und/oder |
| Mo: | 0,01 - 0,2 und/oder |
| Ni: | < 0,1 und/oder |
| V: | < 0,1 und / oder |
| Co: | < 0,5. |

4. Stahl nach einem der Ansprüche 1 bis 3, wobei der Stahl in Form von Platten, Streifen und/oder Blechen mit einer Dickenabmessung von 0 - 25 mm, vorzugsweise einer Dicke von 2 - 15 mm, und einer Breitenabmessung von zumindest 400 mm und vorzugsweise zumindest 1000 mm bereitgestellt wird.

5. Stahl nach einem der Ansprüche 1 bis 4, wobei der Stahl in Form von Platten mit Perforationen bereitgestellt wird, die zu einer Gewichtsreduktion von 0 bis 50 % führen, wobei die Perforationen vorzugsweise eine Öffnungsweite oder einen Durchmesser zwischen 2 und 15 mm aufweisen.

6. Stahl nach Anspruch 4 oder 5, wobei die Platte nivelliert ist, um eine Ebenheit mit einer Abweichung von weniger als 6 mm über 1 m in der Breite und Länge zu erzielen.

7. Verfahren zur Herstellung eines Superbainitstahls, wobei der Stahl einem der vorhergehenden Ansprüche entspricht, wobei das Verfahren die folgenden Schritte umfasst:
Herstellen von geschmolzenem Stahl mit der erforderlichen Zusammensetzung;
kontinuierliches Gießen des geschmolzenen Stahls in die Form einer Bramme;
Warmwalzen der Bramme in die Form eines Streifens;
Aufwickeln des Streifens;
zumindest einmaliges Austenitisieren des Streifens;
gegebenenfalls Entzundern;
Wärmebehandeln des Stahls unter Abschrecken in einem Salzbad bei einer Temperatur zwischen 220 und 300 °C.

8. Verfahren nach Anspruch 7, wobei das Abschrecken in einem Salzbad bei einer Temperatur zwischen 230 und 260 °C durchgeführt wird.

9. Verfahren nach Anspruch 7 oder 8, wobei der Stahl vor der Wärmebehandlung entzundert wird.

10. Verfahren nach einem der Ansprüche 7 bis 9, wobei der Stahlstreifen abgewickelt, in Form von Platten geschnitten und vor der Wärmebehandlung nivelliert wird.

11. Verfahren nach Anspruch 10, wobei die Platten vor der Wärmebehandlung im Zuge des Warmwalzens perforiert werden, wobei das Perforieren vorzugsweise durch Laserschneiden oder Wasserstrahlschneiden oder Bohren oder mechanisches Stanzen erfolgt.

12. Verfahren nach einem der Ansprüche 7 bis 11, wobei das Austenitisieren unter Bainitisieren während einer Glühzeit von mindestens 30 Minuten bei einer Temperatur von zumindest 900 °C durchgeführt wird.

13. Verfahren nach Anspruch 12, wobei das Austenitisieren in einer endothermen Atmosphäre mit einem Kohlenstoffpotential von mindestens 0,4 und vorzugsweise einem Kohlenstoffpotential von mindestens 0,8 C durchgeführt wird.

14. Verfahren nach einem der Ansprüche 7 bis 13, wobei die Wärmebehandlung mit einer Abkühlgeschwindigkeit von 2 - 20 °C pro Sekunde durchgeführt wird.

15. Verfahren nach Anspruch 14, wobei die Wärmebehandlung mit einer Abkühlgeschwindigkeit von 5 - 20 °C pro Sekunde durchgeführt wird.

## Revendications

1. Acier super bainitique ayant une microstructure d'austénite résiduelle allant jusqu'à 30 pour cent avec un reste de lattes de bainite exempte de carbure et de lattes de bainite avec des carbures intragranulaires présents, les lattes de bainite ayant une épaisseur moyenne inférieure à 100 nm et étant constituées des éléments suivants en % en poids :
C : de 0,4 à 1,1
Mn : de 0,4 à 2,1
Si : de 0,4 à 1,1
Al : de 0,0 à 2,0
Cr : inférieur ou égal à 1,4
Ni : de 0,0 à 2,5
Mo : de 0;0 à 0,6
V : de 0,0 à 0,3
Co : de 0,0 à 3,0
P : < 0,025
S : < 0,025
le reste étant du fer et des impuretés inévitables.

2. Acier selon la revendication 1, dans lequel les éléments suivants sont présents en % en poids :
C : de 0,4 à 1,0 et/ou
Mn : de 0,7 à 2,1 et/ou
Si : de 0,4 à 1,1 et/ou
Al : de 0,0 à 1,0 et/ou
Cr : de 0,3 à 1,2 et/ou
Ni : de 0,0 à 1,0 et/ou
Mo : de 0,01 à 0,4 et/ou
V : de 0,0 à 0,2 et/ou
Co : de 0,0 à 2,0.

3. Acier selon la revendication 1 ou 2, dans lequel les éléments suivants sont présents en % en poids :
C : de 0,6 à 0,9 et/ou
Mn : de 0,8 à 1,4 et/ou
Si : de 0,7 à 1,0 et/ou
Al : < 0,1 et/ou
Cr : de 0,7 à 1,1 et/ou
Mo : de 0,01 à 0,2 et/ou
Ni : < 0,1 et/ou
V : < 0,1 et/ou
Co : < 0,5.

4. Acier selon l'une quelconque des revendications 1 à 3, dans lequel l'acier est fourni sous forme de plaques, de bande et/ou de feuilles ayant une dimension en épaisseur allant de 0 à 25 mm, de préférence une épaisseur allant de 2 à 15 mm, et une dimension en largeur d'au moins 400 mm, de préférence d'au moins 1000 mm.

5. Acier selon l'une quelconque des revendications 1 à 4, dans lequel l'acier est fourni en plaques ayant des perforations fournissant une réduction de poids allant de 0 à 50%, les perforations ayant de préférence une largeur d'ouverture ou un diamètre compris(e) entre 2 et 15 mm.

6. Acier selon la revendication 4, ou 5, dans lequel la plaque a été nivelée pour atteindre une planéité ayant un écart inférieur à 6 mm sur 1 mètre de largeur et de longueur.

7. Procédé de fabrication d'un acier super bainitique, ledit acier étant selon l'une quelconque des revendications précédentes, comprenant les étapes suivantes :
la préparation d'acier fondu ayant la composition requise ;
la coulée continue de l'acier fondu en brame ;
le laminage à chaud de la brame sous forme de bande ;
le bobinage de la bande ;
l'austénitisation de la bande au moins une fois ;
le décalaminage facultatif ;
le traitement thermique de l'acier par trempe dans un bain de sel à une température comprise entre 220 et 300°C.

8. Procédé selon la revendication 7, dans lequel la trempe dans un bain de sel est effectuée entre 230 et 260°C.

9. Procédé selon la revendication 7 ou 8, dans lequel l'acier est décalaminé avant le traitement thermique.

10. Procédé selon l'une quelconque des revendications 7 à 9, dans lequel la bande d'acier est déroulée, coupée en plaques et nivelée avant le traitement à chaud.

11. Procédé selon la revendication 10, dans lequel les plaques sont perforées à l'état laminé à chaud avant le traitement thermique, la perforation étant de préférence réalisée par un découpage au laser ou un découpage au jet d'eau ou un perçage ou un poinçonnage mécanique.

12. Procédé selon l'une quelconque des revendications 7 à 11, dans lequel l'austénitisation est réalisée en utilisant une trempe étagée bainitique pendant un temps de trempage d'au moins 30 minutes à une température d'au moins 900°C.

13. Procédé selon la revendication 12, dans lequel l'austénitisation est réalisée dans une atmosphère endothermique ayant un potentiel de carbone d'au moins 0,4% de carbone, de préférence un potentiel de carbone d'au moins 0,8% de carbone.

14. Procédé selon l'une quelconque des revendications 7 à 13, dans lequel le traitement thermique est réalisé avec une vitesse de refroidissement allant de 2 à 20°C par seconde.

15. Procédé selon la revendication 14, dans lequel le traitement thermique est effectué à une vitesse de refroidissement allant de 5 à 20°C par seconde.
